(19) **Europäisches Patentamt / European Patent Office / Office européen des brevets**

(11) **EP 1 287 632 B1**

(12) **EUROPEAN PATENT SPECIFICATION**

(45) Date of publication and mention
of the grant of the patent:
**21.12.2011 Bulletin 2011/51**

(51) Int Cl.:
*H04L 1/00* (2006.01)  *H04B 7/005* (2006.01)

(21) Application number: **01960253.1**

(22) Date of filing: **30.05.2001**

(86) International application number:
**PCT/EP2001/006153**

(87) International publication number:
**WO 2001/095547 (13.12.2001 Gazette 2001/50)**

(54) **DATA BLOCK SIZE ADAPTED LINK QUALITY CONTROL**

DATENBLOCKLÄNGENADAPTIVE KONTROLLE DER VERBINDUNGSQUALITÄT

CONTROLE DE LA QUALITE D'UNE LIAISON ADAPTE A LA LONGUEUR DES BLOCS DE DONNEES

(84) Designated Contracting States:
**AT BE CH CY DE DK ES FI FR GB GR IE IT LI LU MC NL PT SE TR**

(30) Priority: **07.06.2000 EP 00111829**

(43) Date of publication of application:
**05.03.2003 Bulletin 2003/10**

(73) Proprietor: **Telefonaktiebolaget L M Ericsson (publ)**
**164 83 Stockholm (SE)**

(72) Inventor: **SACHS, Joachim**
**52074 Aachen (DE)**

(74) Representative: **Tonscheidt, Andreas**
**Ericsson GmbH**
**Ericsson Allee 1**
**52134 Herzogenrath (DE)**

(56) References cited:
**EP-A- 0 848 515    EP-A- 0 892 579**
**EP-A- 0 998 069    US-A- 5 533 004**

**Description**

**FIELD OF INVENTION**

The present invention relates to a link quality control method and a related apparatus for a data packet transmission between a transmitter and a receiver.

**BACKGROUND OF INVENTION**

Generally, communication systems use a plurality of layers for the exchange of payload. Here, information from higher layers in the communication system is segmented into smaller transport blocks. These transport blocks also referred to as data packets in the following are transmitted over a wireless transmission link using a link quality control.

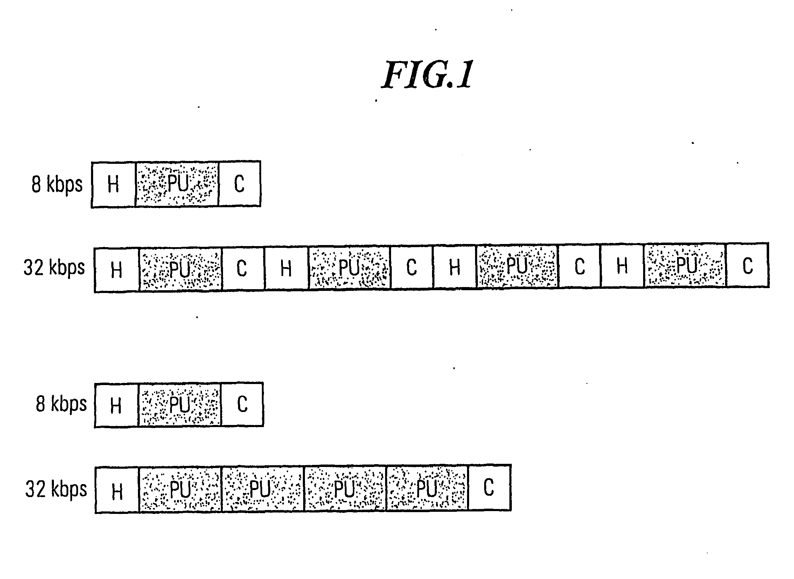

In most communication systems offering only a single static radio bearer - e.g., GSM - the transport block size is set to suit the transmission link properties and to optimise the layer to protocol performance. As shown in the upper part of Fig. 1, irrespective of the modus of the radio bearer and different data rates usually each transport block is encapsulated between a header part H and an error evaluation and correction part C. In other words, using this normal packet data concept does not allow to achieve an optimum transport block size for all data rates.

Recently, communication systems - e.g., the universal mobile telecommunication system UMTS - offer a more flexible and dynamic radio bearer.

Heretofore, a concept of adaptive and variable transport block sizes has been developed which is known as payload unit concept and is shown in the lower part of Fig. 1. The basic idea underlying the payload unit concept is to allow a compression of a radio link control RLC header by transmitting only a single sequence number in a header H provided for several transmission blocks encapsulated in a payload data unit.

As consequence, for the payload unit concept the transport block sizes may change dynamically for a transmission time interval. In particular, the transport block size is adapted to optimise the protocol overhead and is dependent on parameters like transmission rate. Also the transmission buffer may influence the transport block size to reduce protocol overhead. It should be emphasized that even for the same transport rate different transport block sizes may be used.

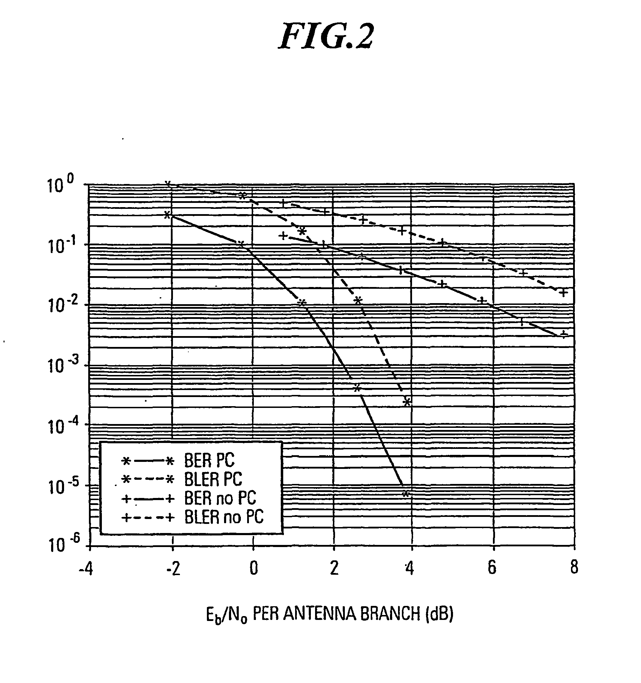

In the following, the impact of the payload unit concept on the power control in communication systems will be discussed with respect to Fig. 2.

Usually, a fast power control is used to compensate link channel variations and variable interference due to other users of the system. Power control algorithms try to achieve a constant signal to interference ratio SIR or a constant Eb/No value for the ratio of bit energy to effective noise power in order to keep the link quality constant. In other words, the focus is on the link quality in terms of a constant bit error rate BER while the channel coding is not changed.

As shown in Fig. 2, for constant block sizes the bit error rate BER and block error rate BLER may be improved significantly through power control. In other words, available power control concepts work well in case transport block sizes are constant for a transmission link. For a constant transport block size and a specific Eb/No value both bit error rate BER and block error rate BLER may be kept more or less constant.

However, for the terrestrial radio access networks used in the next generation mobile communications systems, e.g., according to 3GPP TS 25.214 - Physical layer procedures (FDD), V3.1.0 (1999-12), the transport block sizes may vary in sizes by a factor of, e.g., 80. These variable transport block sizes lead to problems with previously known power control algorithms. While for a constant Eb/No value a rather constant bit error rate may be achieved at the same time the block error rate BLER varies considerably as can be approximated by the following formula:

$$1 - P_{BLER} = \left(1 - P_{BER}\right)^{S_{TB}} \qquad (1)$$

Here, $S_{TB}$ is the transport block size, $P_{BER}$ is the bit error probability, and (1-$P_{BLER}$) is the probability that a transport block is transmitted without error. From the above equation (1) the following two representations may also be easily derived:

$$P_{BLER} = 1 - \left(1 - P_{BER}\right)^{S_{TB}} \qquad (2)$$

$$P_{BER} = 1 - \left(1 - P_{BLER}\right)^{1/S_{TB}} \qquad\qquad (3)$$

According to these equations and depending on the access protocol scheduling the transport block sizes may vary dynamically for every transmission time interval of, e.g., 10 msec. For transport block sizes of 80 bit $\leq S_{TB} \leq$ 4000 bit and a constant bit error rate of BER = $10^{-5}$ the block error rates BLER lie in the following range:

80 bit:        BLER $\cong$ 8 x $10^{-4}$;

4000 bit:        BLER $\cong$ 4 x $10^{-2}$.

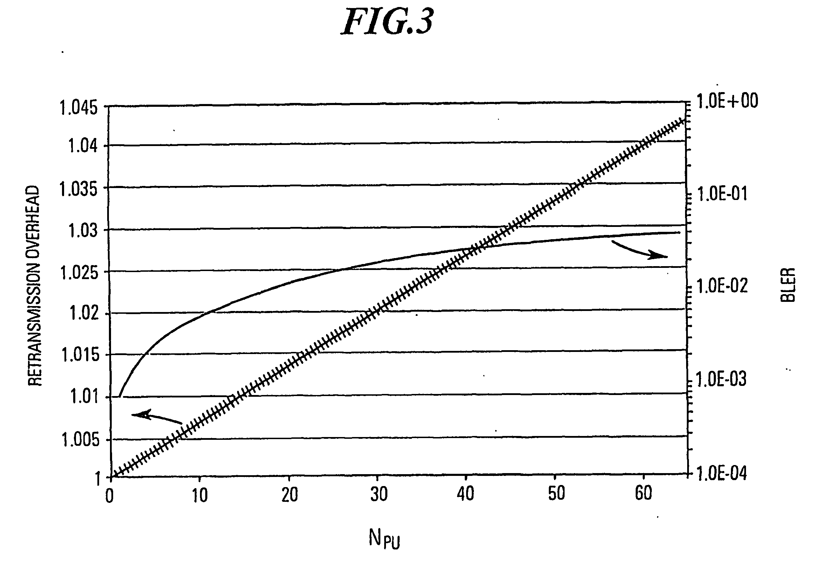

The impact of this range for block error probabilities BLER is illustrated in Fig. 3. Here, the abscissa shows a varying block size $N_{PU}$ x 64 bit in a range between 0 bit and approximately 4000 bit. The left ordinate shows the overhead for retransmission of transport blocks and the right ordinate shows the block error rate BLER on a logarithmic scale.

As shown in Fig. 3, the block error rate BLER varies significantly with variable transport block sizes. It should be noted that the block error rate BLER curve is rather steep for $1 \leq N_{PU} \leq 20$ being the main region for standard applications. From the non-linear behaviour of the block error rate BLER curve it is also clear that it is not possible to find an optimum signal to interference ratio value SIR for all transport block sizes.

The reason for this is that either small transport block sizes would be overprotected when larger transport block sizes achieve a reasonable block error rate BLER or that otherwise the signal to interference ratio SIR target is adapted to small transport block sizes thus leading to a very large BLER for higher transport block sizes. E.g., if the signal to interference ratio SIR target is set such that a block error rate BLER of 10% is reached for transport block sizes of 64 bits, then transport block sizes of 640 bits would have a block error rate of BLER between 50% to 60% which is not acceptable.

In other words, even in case the power control works perfectly to achieve a constant bit error rate BER the block error rate BLER may vary by a factor of, e.g, 100 from transmission time interval to transmission time interval. Therefore, in case of transmission with variable rates a standard power control procedure working on a signal to interference ratio SIR target value would lead to a very wide range of block error rate BLR values.

Yet another problem of the application of existing link quality control mechanisms such as power control is that the signal to interference ratio SIR target is usually determined by an outer loop power control procedure. Such an outer loop power control procedure is not adapted to specific transport blocks and is usually based on measurements of, e.g., mean block error rate or environmental conditions. Therefore, the outer loop power control procedure may only react slowly after a change of the block error rate BLER has occurred and is detected through measurements.

Even worse, if the new signal to interference ratio to SIR target is to be signalled across an air interface by a higher layer protocol the adaptation of the signalled interference SIR target takes even longer.

In conclusion, the rate of adaptation of the interference ratio targets in known power control procedures is by far lower than the rate of change can be in transmission block sizes and rates. However, since the transport block sizes may vary very dynamically known power control procedures may not compensate the block error rate BLER differences caused by varying block sizes. In addition, the impact of coding on the control of either bit error rates BER or block error rates BLER has not been considered for size variations of transmission blocks.

United States patent 5,533,004 describes a communication system using time division multiple access having time slots of a common duration. Based upon a number of information bits to be transmitted a modulation technique is selected. A higher rate technique is chosen for longer packets and a lower rate may be chosen for packets of a shorter duration.

In European patent application EP 0 848 515 A2 an arrangement is disclosed for optimizing data transmission over a bidirectional radio channel. In dependence on the error rate, the packet size and/or the modulation scheme and/or the code rate and/or the power of transmission is adapted such that a predetermined error rate is achieved.

European patent application EP 0 892 579 discloses a procedure for transmitting and receiving ATM cells with variable coding rate and a corresponding digital signal.

However, none of these publications addresses the above problems.

## SUMMARY OF INVENTION

In view of the above, the object of the invention is to reduce variations in block error rates for variable transmission block sizes.

According to the present invention this object is achieved through a link quality control method for a data packet transmission between a transmitter and a receiver, comprising the steps identification of a data packet size for at least one data packet and data packet size adaptive control of at least one parameter determining a link quality.

The present invention allows to achieve a constant block error rate BLER also in case of variable data packet sizes equivalently referred to as transport block sizes. The reason for this is that the quality control procedures are related to the transmission of transport blocks or data packets. Also, the inventive method is not restricted to either a transmitter or a receiver side but may be adapted either selectively or in a combined manner to the transmitter and the receiver side.

Further, the inventive solution provides a link quality control considering transport block sizes through a pro-active adaptation of the link quality control parameters to the transport block sizes rather than a retro-active one described above with respect to a pure outer loop power control.

According to a preferred embodiment of the present invention the at least one parameter determining the link quality is selected from a group consisting of transmission power for the data packet, channel coding for the data packet, modulation scheme or spreading factor. The choice of either the transmission power or the channel coding as parameter determining the link quality is very attractive choice as they are already used within existing link quality control schemes anyway.

According to another preferred embodiment of the present invention the data packet size adaptive control of the at least one parameter determining the link quality is integrated into a basic link quality control. Therefore, the data packet size adaptive control is achieved with a minimum modification of already existing link quality control schemes.

According to another preferred embodiment of the present invention the data packet size is identified at the transmitter through supply of a data packet size value from a data segmentation unit. Therefore, information which is already present in a data segmentation unit is used not only for the data segmentation as such but also for the subsequent data packet size link quality control minimizing the additional effort.

According to another preferred embodiment of the present invention the data packet size is identified at the transmitter through measurement. This embodiment of the present invention is of particular interest in case the inventive link quality control scheme should be integrated in already existing control schemes where, e.g., no dedicated link between data segmentation and link quality control is provided for.

According to another preferred embodiment of the present invention the data packet size adaptive control of the at least one parameter determining the link quality is achieved through use of a pre-stored relationship between data packet size and at least one corresponding parameter determining the link quality. By using a pre-stored relationship between data packet size and a corresponding link quality control parameter it is possible to minimize the computation time necessary to achieve the link quality control.

According to another preferred embodiment of the present invention the data packet size adaptive control of the at least one parameter determining the link quality is achieved through use of a functional relationship between data packet size and a corresponding parameter determining the link quality. The characteristics of the functional relationship may be determined, e.g., by link simulation aiming at a constant block error rate. This preferred embodiment of the present invention allows to achieve the most effective use of memory. Also, by modifying either functional parameters or the functional relationship itself the link quality control may be easily adapted to different operative conditions.

According to another preferred embodiment of the present invention the data packet size adaptive control of the at least one parameter determining the link quality is achieved through use of a relationship between data packet size, the parameter determining the link quality, e.g., channel coding or transmission power, and data packet error rates. Therefore, the inventive link quality control concept may also be adapted to a family of characteristics where a plurality of control parameters may be considered.

According to another preferred embodiment of the present invention the data packet size adaptive control is related to channel coding and is achieved through increase of channel coding protection for larger data packet sizes.

Therefore, this approach allows to apply different coding schemes for different data packet sizes so as to adapt the link quality control to application requirements. In other words, the coding protection may be flexible and different for smaller and larger data packet sizes. The specific channel coding protection selected for a specific data packet size may also be optimised for the specific data packet size, e.g., through application of a related convolution rate or any other appropriate protection.

According to another preferred embodiment of the present invention the data packet size adaptive control of channel coding is achieved through rate matching by repetition for larger data packet sizes and/or rate matching by puncturing for smaller data packet sizes.

By only amending the rate matching scheme it is possible to achieve the data packet size adaptive control with minimum impact and already existing link quality control schemes which usually already support flexible rate matching.

According to another preferred embodiment of the present invention at the receiver at least the following two steps are carried out before channel decoding of received data packets: identification of data packet sizes of received data packets and data packet size adaptive control of at least one parameter determining the link quality.

Preferably, the at least one parameter determining the link quality is transmission power for the data packet and/or channel coding for the data packet.

This preferred embodiment of the present invention relates to the application of the inventive link quality control method, both at the transmitter and the receiver. Since the data packet size adaptive link quality control parameter is available at the transmitter as well as the receiver the inventive concept may be preferably used also in the feedback mechanism from the receiver to the transmitter. Here, the receiver does not try to tune the parameter necessary for the link quality control to a value derived without consideration of data packet size but adapts the parameter in the same sense as the transmitter and then provides a related feedback. It is this simultaneous application of the inventive concept to the transmitter and receiver which allows to achieve optimised link quality control results.

According to another preferred embodiment of the present invention the at least one parameter determining the link quality is transferred from the transmitter to the receiver via a dedicated signalling link. When the at least one link quality control parameter is transferred from the transmitter the parameter is available at the receiver side without any further processing. Thus, additional hardware or software at the receiver may be avoided.

According to another preferred embodiment of the present invention the at least one parameter determining the link quality is transferred from the transmitter to the receiver together with the data packets. In case the at least one link quality control parameter is transmitted with the data packets by multiplexing. This allows to minimize the impact of the present invention on the existing hardware and/or software architecture for both the transmitter and the receiver.

According to another preferred embodiment of the present invention there is provided a computer program product directly loadable into the internal memory of a transmitter unit or a receiver unit comprising software code portions for performing the inventive method when the product is run on a processor or controller of the transmitter unit or a receiver unit.

Therefore, the present invention is also provided to achieve an implementation of the inventive method steps on computer or processor systems. In conclusion, such implementation leads to the provision of computer program products for use with a computer system or more specifically a processor comprised in the transmitter unit or receiver unit.

This programs defining the functions of the present invention can be delivered to a computer/processor in many forms, including, but not limited to information permanently stored on non-writable storage media, e.g., read only memory devices such as ROM or CD ROM discs readable by processors or computer I/O attachments; information stored on writable storage media, i.e. floppy discs and harddrives; or information conveyed to a computer/processor through communication media such as network and/or telephone networks via modems or other interface devices. It should be understood that such media, when carrying processor readable instructions implementing the inventive concept represent alternate embodiments of the present invention.

## BRIEF DESCRIPTION OF DRAWING

In the following, preferred embodiments of the present invention will be described with respect to the drawing in which

Fig. 1 shows the payload unit concept proposed for, e.g., UMTS to reduced a protocol overhead;

Fig. 2 shows how a signal to interference ratio may be mapped to bit error rates and block error rates both with and without power control;

Fig. 3 shows a block error rate and a retransmission overhead for a plurality of transport block sizes;

Fig. 4 shows a flowchart of the data packet size adaptive link quality control method according to the present invention;

Fig. 5 shows a schematic diagram of an apparatus for data packet size adaptive link quality control according to the present invention;

Fig. 6 shows a family of characteristics for different link quality control parameters to be used with the method and/or apparatus for data packet size adaptive link quality control according to the present invention;

Fig. 7 shows a schematic diagram of an apparatus for data packet size adaptive link quality control by rate matching according to the present invention;

Fig. 8 shows the application of the link quality control concept according to the present invention at a transmitter and a receiver;

Fig. 9 shows the application of the link quality control concept according to the present invention at a transmitter and a receiver using a dedicated signalling link for the exchange of control parameters;

Fig. 10     shows the application of the link quality control concept according to the present invention at a transmitter and a receiver using a table look-up technique at the receiver;

Fig. 11     shows an example of the operation of the data packet size adaptive link quality control according to the present invention;

Fig. 12     shows a flowchart of the integration of the data packet size adaptive link quality control into an existing link quality control scheme.

**DESCRIPTION OF PREFERRED EMBODIMENTS**

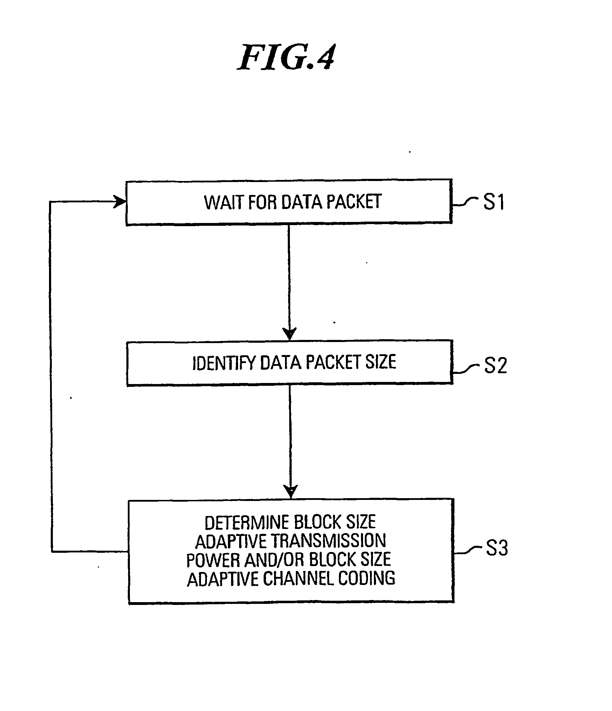

In the following, preferred embodiments of the present invention will be described with respect to Figs. 4 to 11.

As shown in Fig. 4, the link quality control method for a data packet transmission between a transmitter and a receiver according to the present invention continuously awaits the submission of a new data block in step S1. Then, step S2 follows to identify a data packet size equivalently referred to transport block size for the submitted data packet. Finally, in step S3 at least one parameter determining a link quality for the submitted data packet is adaptively controlled according to the identified data packet size.

Preferably, the at least one parameter determining the link quality is selected either as the transmission power for the data packet or as the channel coding used for the data packet. Here, transmission power and channel coding may be influenced either selectively or in combination.

Also, it should be clear that the data packet size adaptive control of the at least one parameter determining the link quality is integrated into an existing base link control and that the data packet size adaptive control is provided as extension thereto.

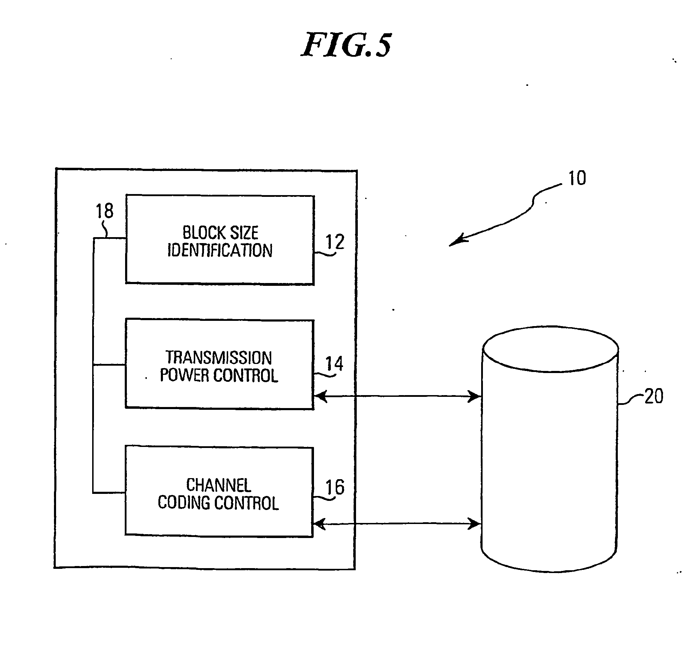

Fig. 5 shows a schematic diagram for an apparatus achieving the data packet size adaptive link quality control according to the present invention.

As shown in Fig. 5, the apparatus 10 comprises a block size identification unit 12 adapted to identify a data packet size of a data packet submitted to the apparatus 10. Also, the apparatus 10 comprises a transmission power control unit 14 and a channel coding control unit 16 adapted to achieve a data packet size adaptive control of at least one parameter determining the link quality.

As shown in Fig. 5, the block size identification unit 12, the transmission power control unit 14, and the channel coding control unit 16 are linked by a common connection 18 for exchange of data packet-related and control-related information. Also, the transmission power control unit 14 and the channel coding control unit 16 have access to a storage unit 20 adapted to store a relationship between a data packet size and a related link quality control parameter. This parameter may be either a data packet size dependent transmission power or channel coding and/or a relationship between a data packet size, a transmission power or channel coding and a data packet error rate, and/or a relationship between a data packet size and a transmission power or rate matching factor expressed as functional relationship.

Generally, a functional relationship between data packet size and a related transmission power modification may be described for a given block size $S_{TB}$ and a reference transmission power $P_{ref}$ according to

$$P = P_{ref} * \gamma(S_{TB}) \qquad\qquad (4)$$

In other words, a selected reference transmission power $P_{ref}$ for a selected reference block size is modified according to a function $\gamma(S_{TB})$. This function is selected according to the considered application.

One expression for the transmission power could be

$$P = P_{TB,ref} + P_{offset} \qquad\qquad (5)$$

where $P_{TB,ref}$ is the transmission power for a reference block size and $P_{offset}$ is the transmission power offset according to the difference between the actual data block size and the reference block size. This representation is particularly well adapted - but not restricted - to applications where the transmission power is controlled in dB.

It should be noted that generally not only the minimum transmission power $P_{TB,min}$ may be considered as reference but any suitable transmission power for a selected data packet size lying between a minimum data packet size and a maximum data packet size. In other words, the reference is generally related to an intermediate data packet size and the transmission power offset may have a positive or negative sign.

One way of calculating the transmission power offset would be

$$P_{offset} = \frac{S_{TB,now}}{S_{TB,ref}} \cdot x \quad dB \qquad (6)$$

where, e.g., $S_{TB}$ now is the actual data packet size, $S_{TB,ref}$ is the reference data packet size, and x is a constant. Again, the selection of any intermediate data packet reference lying between a minimum and maximum packet size is covered by the present invention.

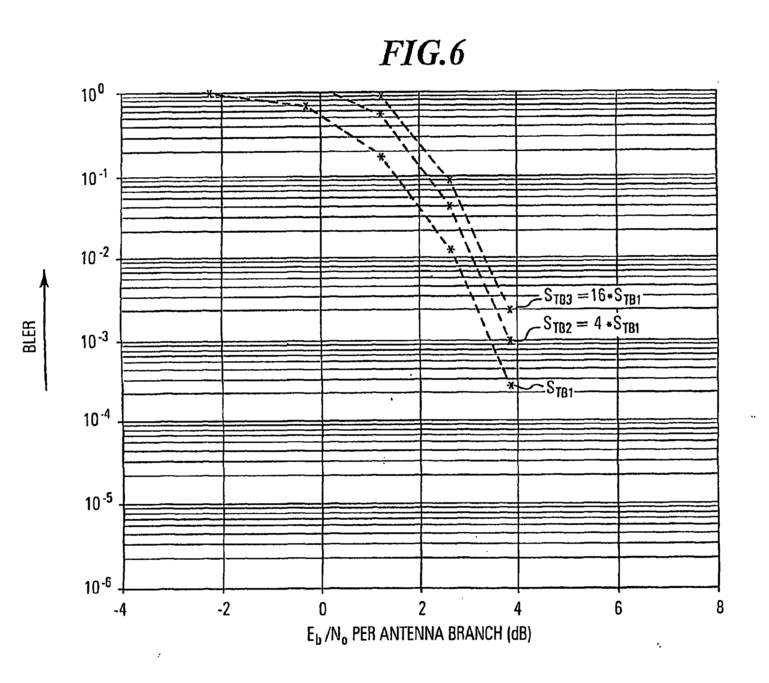

Fig. 6 shows the use of a pre-stored relationship between a data packet size and related link quality control parameters according to a further embodiment of the present invention.

As shown in Fig. 6, the considered embodiment relates to the use of different curves expressing a relationship between the ratio bit energy to effective noise power Eb/No per antenna branch in dB and a block error rate BLER for different data packet sizes $S_{TB1}$, $S_{TB2} = 4 \times S_{TB1}$, and $S_{TB3} = 16 \times S_{TB1}$.

As also shown in Fig. 6, with increasing data packet size also the block error rate BLER will increase. Therefore, using the data packet size of a submitted data packet and a desired block error rate BLER initially the related curve is selected from the family of curves. Then the necessary ratio of bit energy to effective noise power Eb/No is determined using the identified curve for selecting the transmission power.

It is possible to store a table describing a relationship between a data packet size and a parameter determining the link quality, e.g., a relationship between the data packet size and a value describing the increase in transmission power $\Delta P$ for an increase in data packet size or, the rate matching scheme adapted to the identified data packet size or the parameter identifying the codec control.

According to yet another embodiment of the present invention it is also possible to modify the channel coding as parameter being related to the link quality control.

Here, one option is to increase the channel coding protection - e.g., by changing the code rate or coding scheme - for larger data packet sizes. It is also possible to modify the rate matching by repetition for larger data packet sizes and/or puncturing for smaller data packet sizes either selectively or in combination with the modification of the channel coding scheme.

It should be clear that the different approaches to the transmission power modification are implemented by the transmission power control unit 14 shown in Fig. 5. Further, the modification of the channel coding is under the control of the channel coding control unit 16 also shown in Fig. 5. In case a stored relationship between data packet size and control parameter(s) is used either by the transmission power control unit 14 or the channel coding control unit 16 this requires an exchange of data between these units and the storage unit 20.

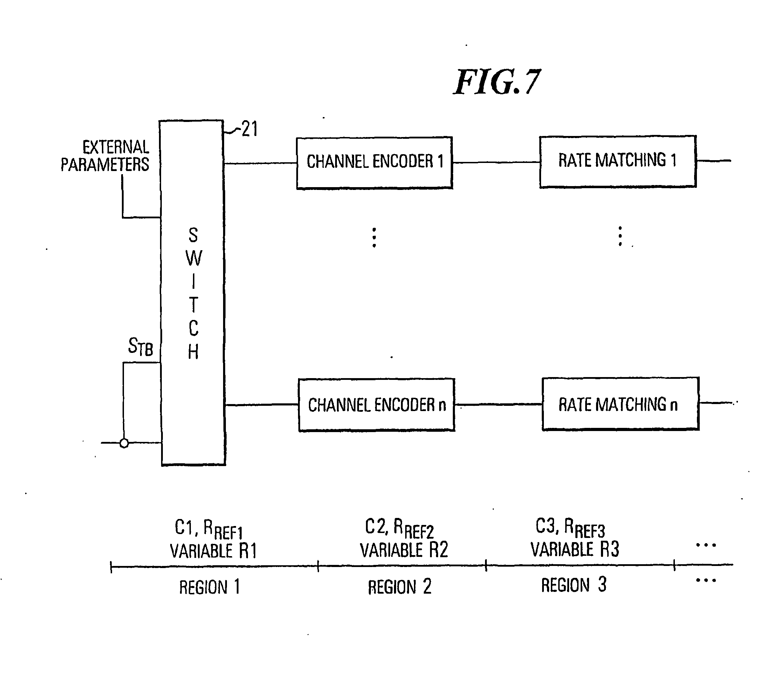

Fig. 7 shows a schematic diagram of an apparatus for data packet size adaptive link quality control by rate matching according to the present invention.

In particular, link quality control by rate matching is achieved by the apparatus shown in Fig. 7 in considering the fact that channel coding may be expressed by a code rate C, where

$$C = \frac{I}{I_c} \qquad (7)$$

I - No. of information bits

$I_C$ - No. of coded information bits

E.g., a 1/2 rate convolution code doubles the number of information bits by encoding.

Further, after channel encoding, rate matching may be applied to modify the code rate and channel protection. A rate matching factor R can be defined such that the number of coded information bits after rate matching $I_C'$ is

$$I_C' = R \cdot I_C \qquad (8)$$

where

R > 1 corresponds to repetition, i.e., stronger protection, and

R < 1 corresponds to puncturing, i.e. weaker protection.

From the above, it may be concluded that the modified code rate C' after rate matching is

$$C' = \frac{I}{I_c'} = \frac{I}{I_c \cdot R} = C \cdot \frac{1}{R} \qquad (9)$$

Therefore, adaptive link quality control for variable transport block sizes may be applied according to the present invention as outlined in the following.

A certain code rate after rate matching

$$C'_{ref} = C \cdot \frac{1}{R_{ref}} \qquad (10)$$

is used for a reference transport block size $S_{TB,ref}$. For different transport block sizes $S_{TB}$ the rate matching factor R may be determined, e.g., by a functional expression

$$R = \frac{S_{TB}}{S_{TB_{ref}}} \cdot x \cdot R_{ref} \qquad (11)$$

where x is a constant. Alternatively, one may use a functional relation for the rate matching factor

$$R = \frac{S_{TB}}{S_{TB_{ref}}} \cdot y + R_{ref}, \text{ for } S_{TB} > S'_{TB,ref} \qquad (12a)$$

$$R = -\frac{S_{TB}}{S_{TB_{ref}}} \cdot y + R_{ref}, \text{ for } S_{TB} < S_{TB,ref} \qquad (12b)$$

where y is a constant and $R_{ref}$ and $R_{ref}'$ are control parameters.

Further, one may store a relation between the rate matching factor R and the transport block size $S_{TB}$ in a table according to

$$R \leftrightarrow S_{TB}. \qquad (13)$$

It is also possible to combine a channel coding type, code rate and variable rate matching factor for adaptive link quality control. As shown in Fig. 7 it is possible to use different relations for different ranges of packet sizes instead of a single relation for all packet sizes. Different ranges are referred to as region 1 to region 3. Within each region any relation, e.g., selected from equation (11) to (13) given above may be used for the rate matching factor R. Also a coding type with code rate Ci is defined for every region.

In the simplest case the transition from one region to another may be triggered by the change of a transport block size. Alternatively, such a transition may be determined in a more complex way. In the latter case also external parameters like power level, interference level or hardware usage either in the transmitter or receiver may be considered in combination with the transport block sizes to determine a dynamic border between different regions. The regions may overlap, e.g., to avoid repeated switching between adjacent regions.

Fig. 7 shows how such principles may be mapped into a hardware structure.

As shown in Fig. 7, a switch 21 receives the transport block size $S_{TB}$ and further external parameters classifying, e.g., the power level, interference level, or hardware usage at the transmitter/ receiver. Then, the switch 21 selectively activates a related channel encoder and a related downstream rate matcher using the determined code rate and rate matching factor, respectively.

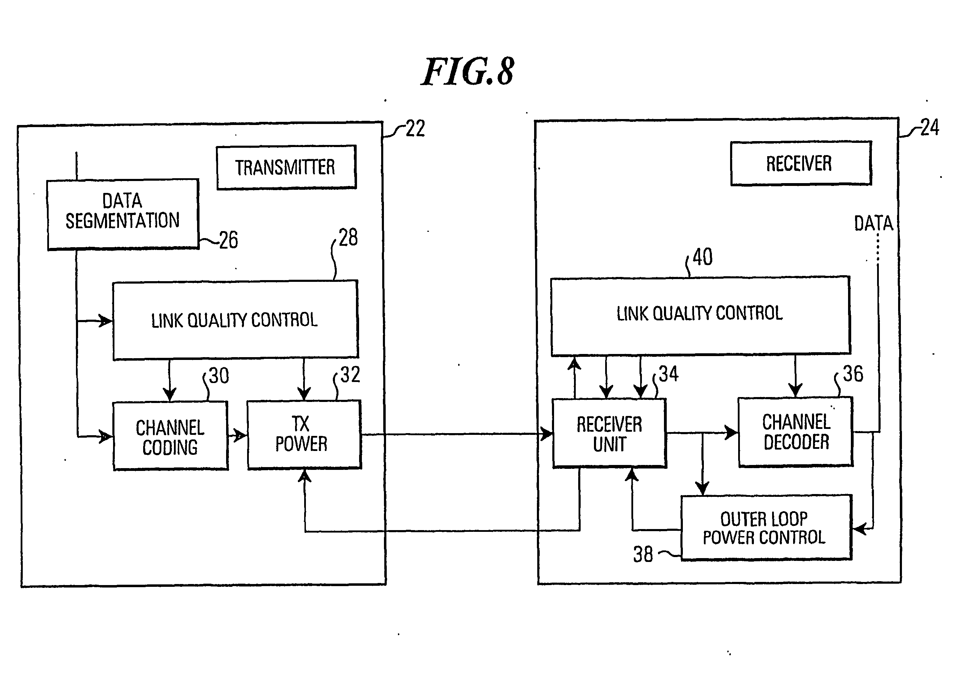

In the following, different application scenarios of the present invention will be described with respect to Figs. 8 to 10.

As shown in Fig. 8, the link quality control has to be achieved between a transmitter 22 and a receiver 24. In the transmitter 22 an input data stream is segmented into different data packets by a data segmentation unit 26. The data packets at the output of the data segmentation unit 26 are submitted to a link quality control unit 28 and a channel coding unit 30 for subsequent output to a transmission power unit 32.

Since according to the present invention the channel coding unit 30 and the transmission power unit 32 may be of any available type as known in the state of the art, a specific description thereof will be omitted.

However, it is the control of the channel coding unit 30 and the transmission power unit 32 in compliance with the data packet size achieved by the link quality control unit 28 which allows for a significant improvement of the block error rate BLER over the state of the art.

As also shown in Fig. 8, at the receiver 24 there is provided a receiver unit 34 and a channel decoder unit 36 which are also known from the state of the art and therefore need no further explanation. The same applies to the outer loop power control unit 38 which modifies the signalled interference SIR target value at certain points in time according to measurements of mean block error rates and/or transmission conditions. This modified signalled interference SIR target value is supplied from the outer loop power control unit 38 to the receiver unit 34 for processing of the reception signal.

As also shown in Fig. 8, at the receiver 24 there is provided a second or receiver link quality control unit 40 which in dependence of the submitted reception data stream derives the data packets size dependent link quality control parameters also used at the transmitter 22. The parameters are then supplied to the receiver 24 to achieve a reception processing in compliance with the data size adaptive control carried out at the transmitter side.

The concept of applying the link quality simultaneously at the transmitter 22 and receiver 24 is independent of the fact which specific parameter is actually used for the data packet size adaptive link quality control, e.g., transmission power and/or channel coding. Nevertheless, it should be clear that the link quality control unit 28 may be realized using the apparatus shown in Fig. 5 and the method illustrated in Fig. 4.

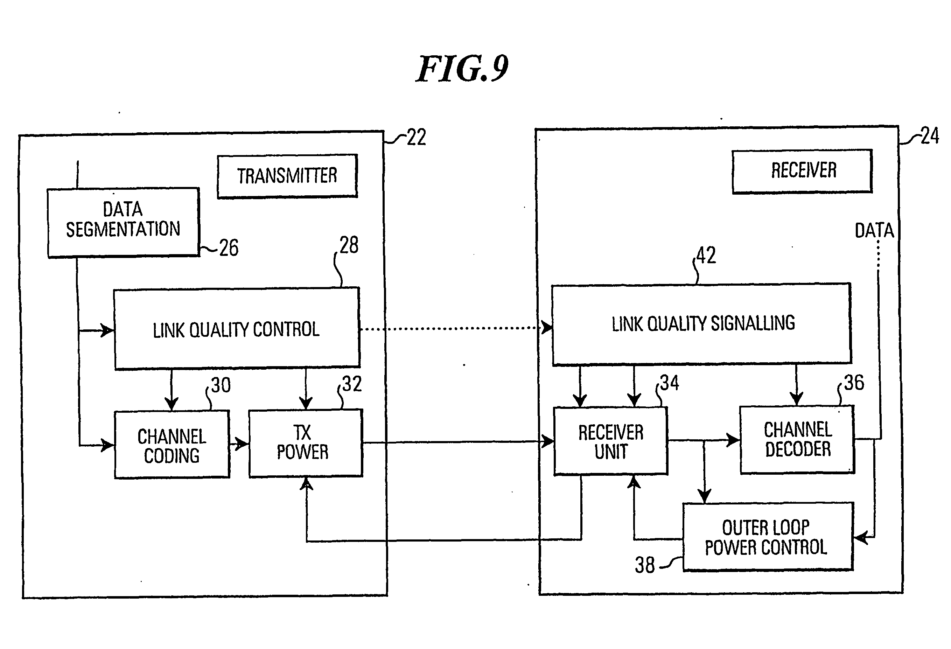

Fig. 9 shows another embodiment of the present invention where the link quality control at the receiver 24 is modified in comparison to Fig. 8. In Fig. 9 those units having the same reference numerals have the same function so that a repeated explanation thereof is omitted.

The embodiment shown in Fig. 9 avoids the extra effort at the receiver 24 for the link quality control unit through use of a link quality signalling unit 42. This link quality signalling unit 42 substitutes the link quality control unit 40 shown in Fig. 8 and is adapted to receive the at least one parameter determining the data packet size adaptive link quality control from the link quality control unit 28 at the transmitter 22 for subsequent submission to the receiver unit 34. Therefore, the use of a dedicated signalling link allows to avoid a repeated determination of the parameter for the data packet size adaptive link quality control at the expense of a slightly increased bandwidth for the dedicated signalling link.

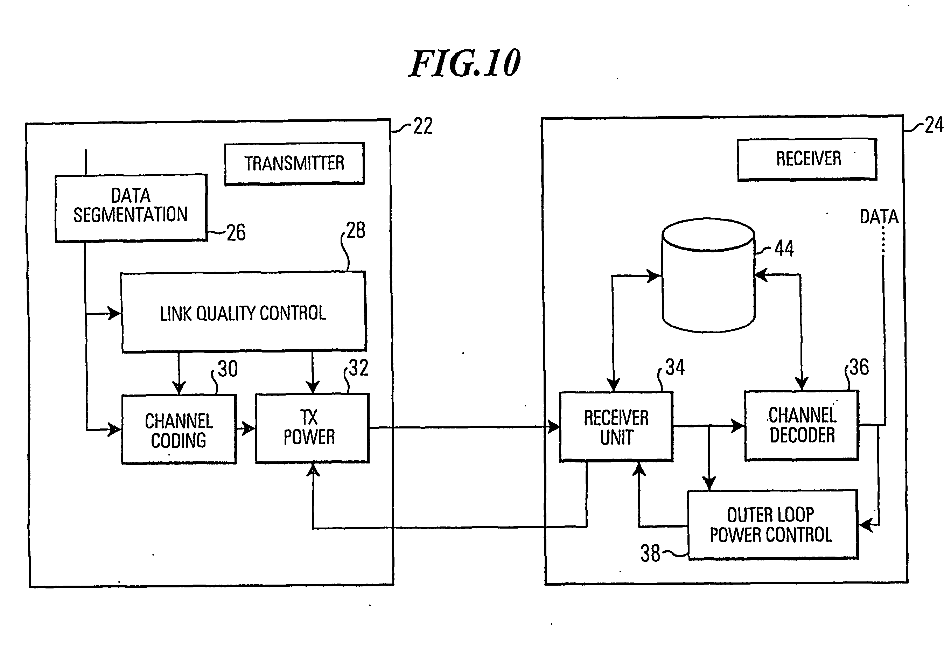

Fig. 10 shows yet another embodiment of the present invention. Again, those units previously described with respect to Figs. 8 and 9 are denoted using the same reference numerals and a repeated explanation thereof will be omitted.

The embodiment shown in Fig. 10 uses a transfer of the at least one parameter determining the link quality from the transmitter to the receiver together with the data packets thus avoiding the dedicated signalling link illustrated in Fig. 9. After reception of the at least one parameter an access to a receiver side storage unit 44 is carried out to map the received parameter into related control quantities for the receiver unit 34 and the channel decoder unit 36.

While different applications of the present invention to the transmitter and receiver side have been discussed with respect to Fig. 8 to 10, it should be clear that also any combination thereof lies as well within the scope of the present invention.

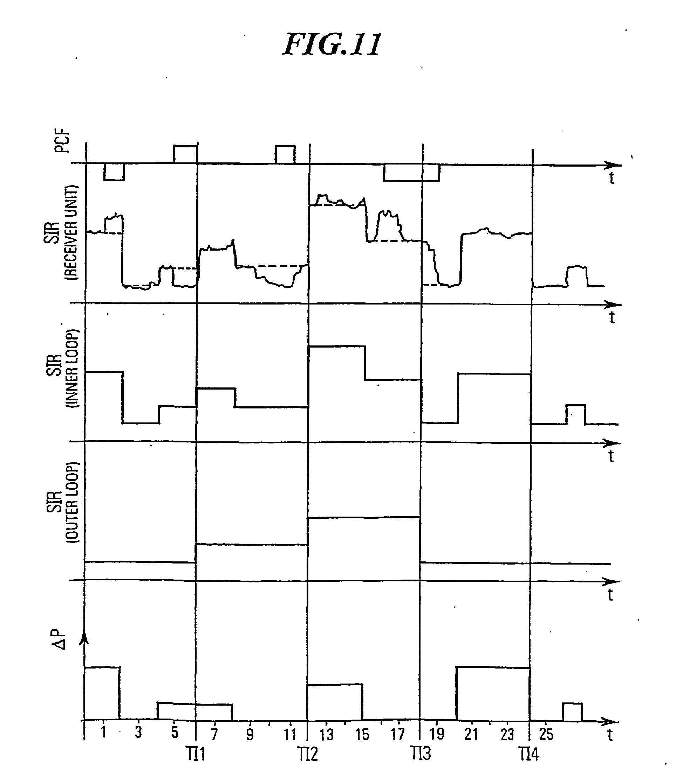

In the following, one example operation with respect to the block size adaptive transmission power control will be explained with reference to Fig. 11.

As shown in Fig. 11, the transmission power control is carried out according to a sequence of time intervals TI1, TI2, TI3, TI4, .... Within each such transmission time interval TIi there are transmitted data packets of different sizes at different points in time t1, t3, ....

The row ΔP of Fig. 11 is related to a transmission power modification for an increased data packet size to achieve a desired block error rate BLER.

This transmission power increment ΔP is determined separately from a signal to interference ratio SIR target value for the outer loop.

As already outlined above, the signal to interference ratio SIR target value for the outer loop is determined, e.g., for each time interval Tli according to external transmission conditions and mean error rates determined by measurements.

The superposition of the transmission power increment ΔP and the signal to interference ratio SIR target value for the outer loop leads to a signal to interference SIR target value for the inner loop shown in the third row of Fig. 11 which is finally used by the receiver unit 34 at the receiver for the control of the signalled interference ratio.

The actual signal to interference ratio is shown in comparison to the signal to interference ratio SIR target value for the inner loop in the second of Fig. 11.

The first row of Fig. 11 shows how a power control feedback from the receiver 24 to the transmitter 22 may be derived from a comparison of the actual signal to interference ratio SIR and the signal to interference ratio target value for the inner loop.

In case the actual signal to interference ratio exceeds the signalled interference ratio SIR target value by certain threshold a negative PCF power control feedback will be given to the transmitter 22, e.g., at the point of time t1, t16, t17, and t18.

On the contrary, if the actual signal to interference ratio falls below the signal to interference ratio SIR target value for the inner loop by a certain amount, a positive power control feedback PCF will be transmitted from the receiver 24 to the transmitter 22 to increase the actual signal to interference ratio towards the signal to the interference ratio SIR target value for the inner loop, e.g., at the point of time t5 and t10.

From Fig. 11 it should be clear that it is the superposition of the transmission power increment ΔP onto the signal to interference ratio SIR for the outer loop leading to a data packet size adaptive control of the link quality in the signal to interference ratio SIR inner control loop.

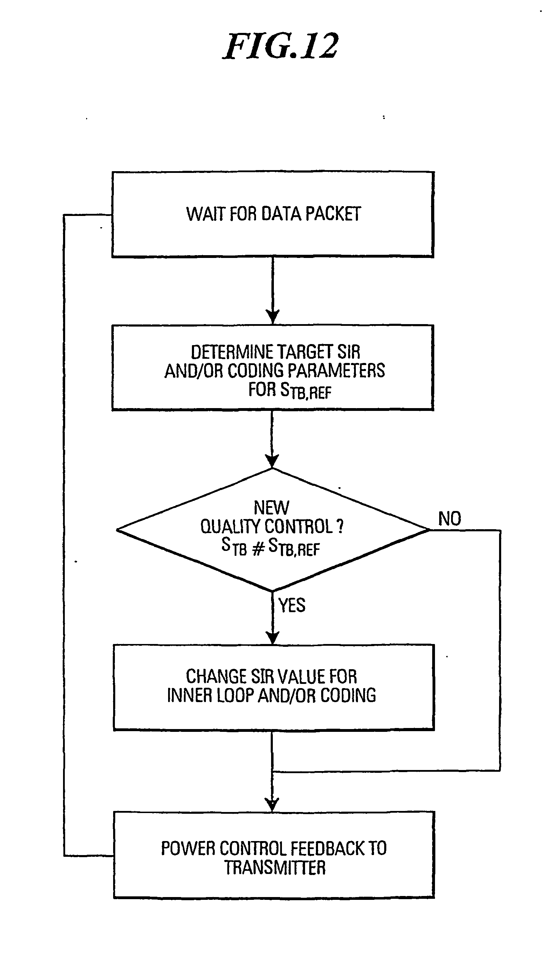

Fig. 12 shows how the inventive approach illustrated with respect to Fig. 11 may also be combined with the modification of coding parameters.

Initially, it is determined whether new data packets are submitted for transmission. Then the target signal to interference ratio shown in the third row of Fig. 11 is determined in compliance with a reference data packet size.

Then, in a further step it is checked whether the data packet size is different from the reference block packet size thus leading to a request for a modified link quality control. If this is not the case, an immediate power control feedback will be given to the transmitter 22. Otherwise the target signal to interference ratio value SIR for the inner loop and illustrated in the third row of Fig. 11 and/or the coding parameters defining the coding scheme will be modified before this power control feedback to the transmitter 22.

As shown in Fig. 12, as long as new data packets are submitted for transmission at the transmitter side the step sequence illustrated in Fig. 12 is repeated to achieve the data packet size adaptive link quality control according to the present invention.

**Claims**

1. Link quality control method for a data packet transmission between a transmitter and a receiver, comprising the steps:

   - identification of a data packet size for at least one data packet (step S2); and
   - data packet size adaptive control of at least one parameter determining a link quality (step S3);
   **characterized in that**
   - the data packet size adaptive control compensates for block error rate differences caused by varying data packet sizes.

2. Link quality control method according to claim 1, **characterised in that** the at least one parameter determining the link quality is selected from a group consisting of transmission power for the data packet, channel coding for the data packet, modulation scheme and spreading factor (step S3).

3. Link quality control method according to claim 1 or 2, **characterized in that** the data packet size adaptive control of the at least one parameter determining the link quality is integrated into a basic link quality control.

4. Link quality control method according to one of the claims 1 to 3, **characterized in that** the data packet size is identified at the transmitter through supply of a data packet size value from a data segmentation unit (26).

5. Link quality control method according to one of the claims 1 to 3, **characterized in that** the data packet size is identified at the transmitter through measurement.

6. Link quality control method according to one of the claims 1 to 5, **characterized in that** the data packet size adaptive control of the at least one parameter determining the link quality is achieved through use of a pre-stored relationship between data packet size and at least one corresponding parameter determining the link quality.

7. Link quality control method according to one of the claims 1 to 6, **characterized in that** the data packet size adaptive control of the at least one parameter determining the link quality is achieved through use of a functional relationship between data packet size and a corresponding parameter determining the link quality.

8. Link quality control method according to claim 7, **characterized in that** the functional relationship describes the transmission power and is defined to

$$P = P_{TB,ref} + P_{offset}$$

wherein $P$ is the current transmission power, $P_{TB,ref}$ is the transmission power for a selected data packet size, and $P_{offset}$ is a data packet size dependent power offset according to the difference between the selected data packet size and the current data packet size.

9. Link quality control method according to claim 8, ***characterized in* that** the data packet size dependent offset is defined to

$$P_{offset} = \frac{S_{TB,now}}{S_{TB,ref}} \cdot x \quad dB \qquad (2)$$

wherein $S_{TB,now}$ is the current data packet size, $S_{TB,ref}$ is the selected data packet size, and $x$ is a constant.

10. Link quality control method according to one of the claims 6 to 9, **characterized in that** the data packet size adaptive control of the at least one parameter determining the link quality is achieved through use of a relationship between data packet size, the parameter determining the link quality, and data packet error rates.

11. Link quality control method according to one of the claims 1 to 10, **characterized in that** the data packet size adaptive control is related to channel coding and is achieved through increase of channel coding protection for larger data packet sizes.

12. Link quality control method according to one of the claims 2 to 11, ***characterized in* that** the data packet size adaptive control of channel coding is achieved through rate matching by repetition for larger data packet sizes and/or rate matching by puncturing for smaller data packet sizes.

13. Link quality control method according to one of the claims 1 to 12, ***characterized in* that** at the receiver at least the following steps are carried out before channel decoding of received data packets:

    - identification of data packet sizes of received data packets; and
    - data packet size adaptive control of at least one parameter determining the link quality.

14. Link quality control method according to one of the claims 1 to 12, ***characterized* in that** the at least one parameter determining the link quality is transferred from the transmitter to the receiver via a dedicated signalling link.

15. Link quality control method according to one of the claims 1 to 12, ***characterized* in that** the at least one parameter determining the link quality is transferred from the transmitter to the receiver together with the data packets.

16. Link quality control method according to one of the claims 13 to 15, *characterized in* that the at least one parameter determining the link quality is selected from a group consisting of transmission power or transmission power offset for the data packet, channel coding for the data packet, modulation scheme and spreading factor.

17. Apparatus for link quality control during a data packet transmission between a transmitter and a receiver, comprising:

   - an identification unit (12) adapted to identify a data packet size for at least one data packet; and
   - a control unit (14, 16) adapted to a data packet size adaptive control of at least one parameter determining the link quality, *characterized in* that the data packet size adaptive control is adapted to compensate for block error rate differences caused by varying data packet sizes.

18. Apparatus according to claim 17, **characterized in that** the at least one parameter determining the link quality is selected from a group consisting of transmission power for the data packet, channel coding for the data packet, modulation scheme and spreading factor.

19. Apparatus according to claim 17 or 18, **characterized in that** it further comprises a storage unit (20) adapted to store a relationship between a data packet size and a transmission power as table and/or a relationship between a data packet size, a transmission power and a data packet error rate and/or a relationship between a data packet size and a transmission power expressed as functional relationship.

20. Apparatus according to claim 19, **characterized in that** the functional relationship describes the transmission power and is defined to

$$P = P_{TB,ref} + P_{offset}$$

wherein $P$ is the current transmission power, $P_{TB,ref}$ is the transmission power for a selected data packet size, and $P_{offset}$ is a data packet size dependent power offset according to the difference between the selected data packet size and the current data packet size.

21. Apparatus according to claim 20, **characterized *in* that** the data packet size dependent offset is defined to

$$P_{offset} = \frac{S_{TB,now}}{S_{TB,ref}} \cdot x \quad dB \qquad\qquad (2)$$

wherein $S_{TB,now}$ is the current data packet size, $S_{TB,ref}$ is the selected data packet size, and x is a constant.

22. Apparatus according to one of the claims 18 to 21, **characterized in that** it comprises a channel coding unit (16) that achieves the channel coding control through increase of channel coding protection for larger data packet sizes.

23. Apparatus according to claim 22, **characterized in that** the channel coding unit (16) achieves the channel coding control through increase of rate matching repetition for larger data packet sizes and increase of rate matching puncturing for smaller data packet sizes.

24. Apparatus according to one of the claims 17 to 23, *characterized in* that it is connected to a link quality signalling unit adapted to submit data packet sizes of received data packets and/or data packet size adaptive control parameters for the reception power and/or the channel decoding.

25. A computer program product directly loadable into the internal memory of a transmitter or receiver comprising software code portions for performing the steps of one of the method claims 1 to 16 when the product is run on a processor of the transmitter or receiver.

**Patentansprüche**

1. Verfahren zur Steuerung der Verbindungsqualität für eine Datenpaketübertragung zwischen einem Sender und einem Empfänger, umfassend die folgenden Schritte:

   - Identifizierung einer Datenpaketgröße für mindestens ein Datenpaket (Schritt S2); und
   - datenpaketgrößenadaptive Steuerung mindestens eines Parameters, der eine Verbindungsqualität bestimmt (Schritt S3);
   **dadurch gekennzeichnet, dass**
   - die datenpaketgrößenadaptive Steuerung Blockfehlerratendifferenzen ausgleicht, die durch variierende Datenpaketgrößen verursacht werden.

2. Verfahren zur Steuerung der Verbindungsqualität nach Anspruch 1, **dadurch gekennzeichnet, dass** der mindestens eine Parameter, der die Verbindungsqualität bestimmt, aus einer Gruppe bestehend aus Sendeleistung für das Datenpaket, Kanalcodierung für das Datenpaket, Modulationsschema und Spreizfaktor ausgewählt wird (Schritt S3).

3. Verfahren zur Steuerung der Verbindungsqualität nach Anspruch 1 oder 2, **dadurch gekennzeichnet, dass** die datenpaketgrößenadaptive Steuerung des mindestens einen Parameters, der die Verbindungsqualität bestimmt, in eine Basis-Verbindungsqualitätssteuerung integriert ist.

4. Verfahren zur Steuerung der Verbindungsqualität nach einem der Ansprüche 1 bis 3, **dadurch gekennzeichnet, dass** die Datenpaketgröße am Sender durch die Bereitstellung eines Datenpaketgrößenwerts von einer Datensegmentierungseinheit (26) ermittelt wird.

5. Verfahren zur Steuerung der Verbindungsqualität nach einem der Ansprüche 1 bis 3, **dadurch gekennzeichnet, dass** die Datenpaketgröße am Sender durch Messung ermittelt wird.

6. Verfahren zur Steuerung der Verbindungsqualität nach einem der Ansprüche 1 bis 5, **dadurch gekennzeichnet, dass** die datenpaketgrößenadaptive Steuerung des mindestens einen Parameters, der die Verbindungsqualität bestimmt, durch die Verwendung einer vorgespeicherten Beziehung zwischen der Datenpaketgröße und mindestens einem entsprechenden Parameter, der die Verbindungsqualität bestimmt, erreicht wird.

7. Verfahren zur Steuerung der Verbindungsqualität nach einem der Ansprüche 1 bis 6, **dadurch gekennzeichnet, dass** die datenpaketgrößenadaptive Steuerung des mindestens einen Parameters, der die Verbindungsqualität bestimmt, durch die Verwendung einer funktionalen Beziehung zwischen der Datenpaketgröße und einem entsprechenden Parameter, der die Verbindungsqualität bestimmt, erreicht wird.

8. Verfahren zur Steuerung der Verbindungsqualität nach Anspruch 7, **dadurch gekennzeichnet, dass** die funktionale Beziehung die Sendeleistung beschreibt und durch

$$P = P_{TB,ref} + P_{offset}$$

definiert ist, wobei $P$ die aktuelle Sendeleistung ist, $P_{TB,ref}$ die Sendeleistung für eine ausgewählte Datenpaketgröße ist, und $P_{offset}$ ein datenpaketgrößenabhängiger Leistungsoffset gemäß der Differenz zwischen der ausgewählten Datenpaketgröße und der aktuellen Datenpaketgröße ist.

9. Verfahren zur Steuerung der Verbindungsqualität nach Anspruch 8, **dadurch gekennzeichnet, dass** der datenpaketgrößenabhängige Offset durch

$$P_{offset} = \frac{S_{TB,now}}{S_{TB,ref}} \cdot x \quad dB \tag{2}$$

definiert ist, wobei $S_{TB,now}$ die aktuelle Datenpaketgröße ist, $S_{TB,ref}$ die ausgewählte Datenpaketgröße ist, und x eine Konstante ist.

10. Verfahren zur Steuerung der Verbindungsqualität nach einem der Ansprüche 6 bis 9, **dadurch gekennzeichnet, dass** die datenpaketgrößenadaptive Steuerung des mindestens einen Parameters, der die Verbindungsqualität bestimmt, durch die Verwendung einer Beziehung zwischen der Datenpaketgröße, dem Parameter, der die Verbindungsqualität bestimmt, und Datenpaketfehlerraten erreicht wird.

11. Verfahren zur Steuerung der Verbindungsqualität nach einem der Ansprüche 1 bis 10, **dadurch gekennzeichnet, dass** die datenpaketgrößenadaptive Steuerung mit Kanalcodierung in Beziehung steht und durch Erhöhung von Kanalcodierungsschutz für größere Datenpaketgrößen erreicht wird.

12. Verfahren zur Steuerung der Verbindungsqualität nach einem der Ansprüche 2 bis 11, **dadurch gekennzeichnet, dass** die datenpaketgrößenadaptive Steuerung von Kanalcodierung durch Ratenanpassung durch Wiederholung für größere Datenpaketgrößen und/oder Ratenanpassung durch Punktierung für kleinere Datenpaketgrößen erreicht wird.

13. Verfahren zur Steuerung der Verbindungsqualität nach einem der Ansprüche 1 bis 12, **dadurch gekennzeichnet, dass** am Empfänger wenigstens die folgenden Schritte vor der Kanaldecodierung von empfangenen Datenpaketen ausgeführt werden:

   - Identifizierung von Datenpaketgrößen von empfangenen Datenpaketen; und
   - datenpaketgrößenadaptive Steuerung mindestens eines Parameters, der eine Verbindungsqualität bestimmt.

14. Verfahren zur Steuerung der Verbindungsqualität nach einem der Ansprüche 1 bis 12, **dadurch gekennzeichnet, dass** der mindestens eine Parameter, der die Verbindungsqualität bestimmt, vom Sender über eine dedizierte Signalisierungsverbindung an den Empfänger übertragen wird.

15. Verfahren zur Steuerung der Verbindungsqualität nach einem der Ansprüche 1 bis 12, **dadurch gekennzeichnet, dass** der mindestens eine Parameter, der die Verbindungsqualität bestimmt, vom Sender zusammen mit den Datenpaketen an den Empfänger übertragen wird.

16. Verfahren zur Steuerung der Verbindungsqualität nach einem der Ansprüche 13 bis 15, **dadurch gekennzeichnet, dass** der mindestens eine Parameter, der die Verbindungsqualität bestimmt, aus einer Gruppe bestehend aus Sendeleistung oder Sendeleistungsoffset für das Datenpaket, Kanalcodierung für das Datenpaket, Modulationsschema und Spreizfaktor ausgewählt wird.

17. Vorrichtung zur Steuerung der Verbindungsqualität während einer Datenpaketübertagung zwischen einem Sender und einem Empfänger, umfassend:

   - eine Identifizierungseinheit (12), die so ausgelegt ist, dass sie die Datenpaketgröße für mindestens ein Datenpaket identifiziert; und
   - eine Steuereinheit (14, 16), die für eine datenpaketgrößenadaptive Steuerung mindestens eines Parameters ausgelegt ist, der die Verbindungsqualität bestimmt, **dadurch gekennzeichnet, dass** die datenpaketgrößenadaptive Steuerung so ausgelegt ist, dass sie Blockfehlerratendifferenzen ausgleicht, die durch variierende Datenpaketgrößen verursacht werden.

18. Vorrichtung nach Anspruch 17, **dadurch gekennzeichnet, dass** der mindestens eine Parameter, der die Verbindungsqualität bestimmt, aus einer Gruppe bestehend aus Sendeleistung für das Datenpaket, Kanalcodierung für das Datenpaket, Modulationsschema und Spreizfaktor ausgewählt ist.

19. Vorrichtung nach Anspruch 17 oder 18, **dadurch gekennzeichnet, dass** sie ferner eine Speichereinheit (20) umfasst, die so ausgelegt ist, dass sie eine Beziehung zwischen einer Datenpaketgröße und einer Sendeleistung als Tabelle und/oder eine Beziehung zwischen einer Datenpaketgröße, einer Sendeleistung und einer Datenpaketfehlerrate und/oder eine Beziehung zwischen einer Datenpaketfehlerrate und einer Sendeleistung als funktionale Beziehung ausgedrückt speichert.

20. Vorrichtung nach Anspruch 19, **dadurch gekennzeichnet, dass** die funktionale Beziehung die Sendeleistung beschreibt und durch

$$P = P_{TB,ref} + P_{offset}$$

definiert ist, wobei $P$ die aktuelle Sendeleistung ist, $P_{TB,ref}$ die Sendeleistung für eine ausgewählte Datenpaketgröße ist, und $P_{offset}$ ein datenpaketgrößenabhängiger Leistungsoffset gemäß der Differenz zwischen der ausgewählten Datenpaketgröße und der aktuellen Datenpaketgröße ist.

21. Vorrichtung nach Anspruch 20, **dadurch gekennzeichnet, dass** der datenpaketgrößenabhängige Offset durch

$$P_{offset} = \frac{S_{TB,now}}{S_{TB,ref}} \cdot x \quad dB \qquad (2)$$

definiert ist, wobei $S_{TB,now}$ die aktuelle Datenpaketgröße ist, $S_{TB,ref}$ die ausgewählte Datenpaketgröße ist, und x eine Konstante ist.

22. Vorrichtung nach einem der Ansprüche 18 bis 21, **dadurch gekennzeichnet, dass** sie eine Kanalcodierungseinheit (16) umfasst, welche die Kanalcodierungssteuerung durch Erhöhung von Kanalcodierungsschutz für größere Datenpaketgrößen erreicht.

23. Vorrichtung nach Anspruch 22, **dadurch gekennzeichnet, dass** die Kanalcodierungseinheit (16) die Kanalcodierungssteuerung durch Erhöhung von Ratenanpassungswiederholung für größere Datenpaketgrößen und Erhöhung von Ratenanpassungspunktierung für kleinere Datenpaketgrößen erreicht.

24. Vorrichtung nach einem der Ansprüche 17 bis 23, **dadurch gekennzeichnet, dass** sie mit einer Verbindungsqualitätssignalisierungseinheit verbunden ist, die so ausgelegt ist, dass sie Datenpaketgrößen von empfangenen Datenpaketen und/oder datenpaketgrößenadaptive Steuerungsparameter für die Empfangsleistung und/oder die Kanalcodierung übermittelt.

25. Computerprogrammprodukt, das direkt in einen internen Speicher eines Senders oder Empfängers geladen werden kann, umfassend Softwarecodeabschnitte zum Ausführen der Schritte nach einem der Verfahrensansprüche 1 bis 16, wenn das Produkt auf einem Prozessor des Senders oder Empfängers ausgeführt wird.

**Revendications**

1. Procédé de commande de qualité de liaison pour une transmission de paquets de données entre un émetteur et un récepteur, comprenant les étapes de :

   - identification d'une taille de paquet de données pour au moins un paquet de données (étape S2), et
   - commande adaptative de taille de paquet de données d'au moins un paramètre déterminant une qualité de liaison (étape S3) ;
   **caractérisé en ce que**
   - la commande adaptative de taille de paquet de données compense les différences de taux d'erreur de bloc causées par des tailles de paquet de données variables.

2. Procédé de commande de qualité de liaison selon la revendication 1, **caractérisé en ce que** au moins un paramètre déterminant la qualité de liaison est sélectionné parmi un groupe constitué de la puissance de transmission du paquet de données, le codage de canal pour le paquet de données, le système de modulation et le facteur d'étalement (étape S3).

3. Procédé de commande de qualité de liaison selon la revendication 1 ou 2, **caractérisé en ce que** la commande adaptative de taille de paquet de données d'au moins un paramètre déterminant la qualité de liaison est intégrée dans une commande basique de qualité de liaison.

4. Procédé de commande de qualité de liaison selon une des revendications 1 à 3, **caractérisé en ce que** la taille de paquet de données est identifiée au niveau de l'émetteur via la fourniture d'une valeur de taille de paquet de données provenant d'une unité de segmentation de données (26).

5. Procédé de commande de qualité de liaison selon un des revendications 1 à 3, **caractérisé en ce que** la taille de paquet de données est identifiée au niveau de l'émetteur via des mesures.

6. Procédé de commande de qualité de liaison selon une des revendications 1 à 5, **caractérisé en ce que** la commande adaptative de taille de paquet de données d'au moins un paramètre déterminant la qualité de liaison est réalisée via l'utilisation d'une relation prémémorisée entre une taille de paquet de données et au moins un paramètre correspondant déterminant la qualité de liaison.

7. Procédé de commande de qualité de liaison selon une des revendications 1 à 6, **caractérisé en ce que** la commande adaptative de taille de paquet de données d'au moins un paramètre déterminant la qualité de liaison est réalisée via l'utilisation d'une relation fonctionnelle entre une taille de paquet de données et un paramètre correspondant déterminant la qualité de liaison.

8. Procédé de commande de qualité de liaison selon la revendication 7, **caractérisé en ce que** la relation fonctionnelle décrit la puissance de transmission et est définie comme

$$P= P_{TB,ref} + P_{offset}$$

où $P$ est la puissance de transmission actuelle, $P_{TB,ref}$ est la puissance de transmission pour une taille de paquet de données sélectionnée et $P_{offset}$ est un décalage de puissance fonction de la taille de paquet de données selon la différence entre la taille de paquet de données sélectionnée et la taille de paquet de données actuelle.

9. Procédé de commande de qualité de liaison selon la revendication 8, **caractérisé en ce que** le décalage fonction de la taille de paquet de données est défini comme

$$P_{offset} = \frac{S_{TB,now}}{S_{TB,ref}} \cdot x \quad dB \qquad\qquad (2)$$

dans lequel $S_{Tb,now}$ est la taille de paquet de données actuelle, $S_{TB,ref}$ est la taille de paquet de données sélectionnée et x est une constante.

10. Procédé de commande de qualité de liaison selon une des revendications 6 à 9, **caractérisé en ce que** la commande adaptative de taille de paquet de données d'au moins un paramètre déterminant la qualité de liaison est réalisée via l'utilisation d'une relation entre une taille de paquet de données, le paramètre déterminant la qualité de liaison et les taux d'erreur de paquet de données.

11. Procédé de commande de qualité de liaison selon une des revendications 1 à 10, **caractérisé en ce que** la commande adaptative de taille de paquet de données est relative au codage de canal et est réalisée via l'augmentation d'une protection de codage de canal pour des tailles plus grandes de paquet de données.

12. Procédé de commande de qualité de liaison selon une des revendications 2 à 11, **caractérisé en ce que** la commande adaptative de taille de paquet de données du codage de canal est réalisée via concordance de taux par répétition pour de plus grandes tailles de paquet de données et/ou concordance de taux par ponction pour de plus petites tailles de paquets de données.

13. Procédé de commande de qualité de liaison selon une des revendications 1 à 12, **caractérisé en ce que** au niveau du récepteur au moins les étapes suivantes sont effectuées avant le décodage de canal des paquets de données reçus :

- identification des tailles de paquet de données des paquets de données reçus ; et
- commande adaptative de taille de paquet de données d'au moins un paramètre déterminant la qualité de liaison.

**14.** Procédé de commande de qualité de liaison selon une des revendications 1 à 12, **caractérisé en ce que** au moins un paramètre déterminant la qualité de liaison est transféré de l'émetteur au récepteur via une liaison de signalisation dédiée.

**15.** Procédé de commande de qualité de liaison selon une des revendications 1 à 12, **caractérisé en ce que** au moins un paramètre déterminant la qualité de liaison est transféré de l'émetteur au récepteur conjointement aux paquets de données.

**16.** Procédé de commande de qualité de liaison selon une des revendications 13 à 15, **caractérisé en ce que** au moins un paramètre déterminant la qualité de liaison est sélectionné parmi un groupe constitué de la puissance de transmission ou du décalage de puissance de transmission pour le paquet de données, le codage de canal pour le paquet de données, le système de modulation et le facteur d'étalement.

**17.** Appareil de commande de qualité de liaison pendant une transmission de paquets de données entre un émetteur et un récepteur, comprenant :

- une unité d'identification (12) adaptée pour identifier une taille de paquet de données pour au moins un paquet de données ; et
- une unité de commande (14,16) adaptée à une commande adaptative de taille de paquet de données d'au moins un paramètre déterminant la qualité de liaison, **caractérisé en ce que** la commande adaptative de taille de paquet de données est adaptée pour compenser des différences de taux d'erreur de bloc causées par des tailles variables de paquets de données.

**18.** Appareil selon la revendication 17, **caractérisé en ce que** au moins un paramètre déterminant la qualité de liaison est sélectionné parmi un groupe constitué de la puissance de transmission pour le paquet de données, le codage de canal pour le paquet de données, le système de modulation et le facteur d'étalement.

**19.** Appareil selon la revendication 17 ou 18, **caractérisé en ce que** il comprend en outre une unité de mémorisation (20) adaptée pour mémoriser une relation entre une taille de paquet de données et une puissance de transmission comme une table et/ou une relation entre une taille de paquet de données, une puissance de transmission et un taux d'erreur de paquet de données et/ou une relation entre une taille de paquet de données et une puissance de transmission exprimée comme une relation fonctionnelle.

**20.** Appareil selon la revendication 19, **caractérisé en ce que** la relation fonctionnelle décrit la puissance de transmission et est définie comme

$$P = P_{TB,ref} + P_{offset}$$

où $P$ est la puissance de transmission actuelle, $P_{TS,ref}$ est la puissance de transmission pour une taille de paquet de données sélectionnée et $P_{offset}$ est un décalage de puissance fonction de la taille de paquet de données selon la différence entre la taille de paquet de données sélectionnée et la taille de paquet de données actuelle.

**21.** Appareil selon la revendication 20, **caractérisé en ce que** le décalage fonction de la taille de paquet de données est défini comme

$$P_{offset} = \frac{S_{TB,now}}{S_{TB,ref}} \cdot x \quad dB \tag{2}$$

dans lequel $S_{Tb,now}$ est la taille de paquet de données actuelle, $S_{TB,ref}$ est la taille de paquet de données sélectionnée et x est une constante.

22. Appareil selon une des revendications 18 à 21, **caractérisé en ce que** il comprend une unité de codage de canal (16) qui réalise la commande de codage de canal via l'augmentation de la protection de codage de canal pour des plus grandes tailles de paquet de données.

23. Appareil selon la revendication 22, **caractérisé en ce que** l'unité de codage de canal (16) réalise la commande de codage de canal via l'augmentation de la répétition de concordance de taux pour de plus grandes tailles de paquets de données et l'augmentation de la ponction de concordance de taux pour de plus petites tailles de paquets de données.

24. Appareil selon une des revendications 17 à 23, **caractérisé en ce que** il est connecté à une unité de signalisation de qualité de liaison adaptée pour soumettre des tailles de paquets de données de paquets de données reçus et/ou des paramètres de commande adaptative de taille de paquet de données pour la puissance de réception et/ou le décodage de canal.

25. Produit de programme informatique chargeable directement dans la mémoire interne d'un émetteur ou récepteur comprenant des portions de code logiciel pour mettre en oeuvre les étapes d'une des revendications 1 à 16 quand le produit est exécuté sur un processeur de l'émetteur ou du récepteur.

## FIG.1

# FIG.2

Legend:
- *———* BER PC
- *– – –* BLER PC
- +———+ BER no PC
- +– – –+ BLER no PC

$E_b/N_o$ PER ANTENNA BRANCH (dB)

# FIG.3

# FIG.4

```
        ┌────────────────────────────────────┐
───────►│        WAIT FOR DATA PACKET        │──┐ S1
│       └────────────────────────────────────┘
│                        │
│                        ▼
│       ┌────────────────────────────────────┐
│       │       IDENTIFY DATA PACKET SIZE     │──┐ S2
│       └────────────────────────────────────┘
│                        │
│                        ▼
│       ┌────────────────────────────────────┐
│       │         DETERMINE BLOCK SIZE        │
│       │      ADAPTIVE TRANSMISSION          │──┐ S3
└───────│      POWER AND/OR BLOCK SIZE        │
        │      ADAPTIVE CHANNEL CODING        │
        └────────────────────────────────────┘
```

# FIG.5

BLOCK SIZE
IDENTIFICATION  12

TRANSMISSION
POWER CONTROL  14

CHANNEL
CODING CONTROL  16

18

10

20

FIG.6

# FIG.7

EXTERNAL
PARAMETERS

21

| S W I T C H | CHANNEL ENCODER 1 | RATE MATCHING 1 |

$S_{TB}$

CHANNEL ENCODER n    RATE MATCHING n

C1, $R_{REF1}$
VARIABLE R1

C2, $R_{REF2}$
VARIABLE R2

C3, $R_{REF3}$
VARIABLE R3

...

REGION 1          REGION 2          REGION 3          ...

EP 1 287 632 B1

## FIG.8

TRANSMITTER — 22

DATA SEGMENTATION — 26

LINK QUALITY CONTROL — 28

CHANNEL CODING — 30

TX POWER — 32

RECEIVER — 24

DATA

LINK QUALITY CONTROL — 40

RECEIVER UNIT — 34

CHANNEL DECODER — 36

OUTER LOOP POWER CONTROL — 38

EP 1 287 632 B1

*FIG.9*

## FIG.10

TRANSMITTER 22

DATA SEGMENTATION 26

LINK QUALITY CONTROL 28

CHANNEL CODING 30

TX POWER 32

RECEIVER 24

44

DATA

RECEIVER UNIT 34

CHANNEL DECODER 36

OUTER LOOP POWER CONTROL 38

EP 1 287 632 B1

# FIG.11

# FIG.12

```
┌─────────────────────────────────┐
│      WAIT FOR DATA PACKET        │
└─────────────────────────────────┘
              │
              ▼
┌─────────────────────────────────┐
│       DETERMINE TARGET SIR       │
│    AND/OR CODING PARAMETERS      │
│          FOR S_TB,REF            │
└─────────────────────────────────┘
              │
              ▼
         ╱╲
        ╱    ╲
       ╱  NEW  ╲
      ╱ QUALITY ╲──── NO
      ╲ CONTROL?╱
       ╲S_TB#S_TB,REF╱
        ╲    ╱
         ╲╱
          │ YES
          ▼
┌─────────────────────────────────┐
│       CHANGE SIR VALUE FOR       │
│     INNER LOOP AND/OR CODING     │
└─────────────────────────────────┘
              │
              ▼
┌─────────────────────────────────┐
│    POWER CONTROL FEEDBACK TO     │
│           TRANSMITTER            │
└─────────────────────────────────┘
```

Determine Target SIR AND/OR CODING PARAMETERS FOR $S_{TB,REF}$

NEW QUALITY CONTROL? $S_{TB} \# S_{TB,REF}$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5533004 A
- EP 0848515 A2

- EP 0892579 A